## Europäisches Patentamt
## European Patent Office
## Office européen des brevets

(19)

(11) Veröffentlichungsnummer : **0 123 253**
**B1**

(12) **EUROPÄISCHE PATENTSCHRIFT**

(45) Veröffentlichungstag der Patentschrift :
03.12.86

(21) Anmeldenummer : 84104294.8

(22) Anmeldetag : 16.04.84

(51) Int. Cl.⁴ : **C 09 D   3/80,** C 09 D   3/64,
C 09 D  17/00

(54) Verfahren zur Lackierung.

(30) Priorität : 23.04.83 DE 3314777

(43) Veröffentlichungstag der Anmeldung :
31.10.84 Patentblatt 84/44

(45) Bekanntmachung des Hinweises auf die Patenterteilung : 03.12.86 Patentblatt 86/49

(84) Benannte Vertragsstaaten :
BE DE FR GB IT NL SE

(56) Entgegenhaltungen :
DE-A- 2 603 259
DE-A- 3 023 722

(73) Patentinhaber : **Herberts Gesellschaft mit beschränkter Haftung**
**Christbusch 25**
**D-5600 Wuppertal 2 (DE)**

(72) Erfinder : **Graetz, Hans-Joachim, Dr.**
**Emanuel-Felke-Strasse 41**
**D-5600 Wuppertal 12 (DE)**
Erfinder : **Stranghöner, Dieter, Dr.**
**Hobeuken 36**
**D-4322 Sprockhövel (DE)**

(74) Vertreter : **Türk, Dietmar, Dr. rer. nat. et al**
**Türk, Gille + Hrabal Patentanwälte Bruckner Strasse
20**
**D-4000 Düsseldorf 13 (DE)**

## Beschreibung

Die Erfindung betrifft ein Verfahren zur Lackierung von in üblicher Weise grundierten Metall-Karosserieteilen von Kraftfahrzeugen mit Lacken, die Pigmente enthalten, die in der DE-A-30 23 722 beschrieben sind. Es besteht ein großes Bedürfnis nach Kraftfahrzeugen, die mit sogenannten Effekt-Lacken lackiert sind. Diese Lackierungen sind auch als sogenannte Metallic-Lacke bekannt. Die Lackoberfläche hat einen metallisch glänzenden Charakter. Um einen guten Metalleffekt zu erzielen, muß in der Regel mindestens eine sogenannte Zweischicht-Lackierung durchgeführt werden. Die untere Schicht enthält zur Erzeugung des sogenannten Metalleffekts Metallplättchen, im allgemeinen Aluminiumplättchen. Wenn nicht nur der Silber-Metallic-Effekt der Aluminiumplättchen gewünscht wird, sondern eine farbige Metallic-Lackierung, enthält diese Schicht zusätzlich entsprechende Farbpigmente. Auf diese die Metallplättchen enthaltende Lackschicht wird dann ein Klarlack aufgebracht. Um ein schnelles Überlackierungen der ersten Schicht zu ermöglichen, enthält diese neben dem Bindemittel zweckmäßig Celluloseester, insbesondere Celluloseacetobutyrat (vgl. US-A-3 369 147).

Die DE-A-30 35 917 beschreibt ein Verfahren zum Aufbringen einer mehrschichtigen Lackierung auf ein Kraftfahrzeug, gemäß dem auf eine Farblackschicht eine Effektlackschicht aufgebracht wird, die mit Titandioxid beschichtete Glimmerplättchen als sogenannte Interferenzpigmente enthält, und gegebenenfalls hierauf eine Klarlackschicht aufgebracht wird. Diese Pigmente ergeben einen stärkeren Changiereffekt als Metallic-Pigmente (Aluminiumplättchen).

In der DE-A-30 23 722 sind Kupferphthalocyaninpigmente der β-Modifikation und deren Verwendung in Lacken beschrieben, die ebenfalls einen gewissen Metallic-Effekt ergeben, der eine Rot-Blau-Tönung je nach Reflexionswinkel des Lichtes aufweist. Auch gemäß diesem Stand der Technik müssen die Lackschichten zur Erzielung eines annehmbaren Effekts in mindestens zwei Schichten erzeugt werden, wie in den Beispielen angegeben.

Nach dem Stand der Technik ist es nicht bekannt, zur Serienlackierung von Metall-Karosserieteilen von Kraftfahrzeugen Lacke einzusetzen, die als Pigmente die oben erwähnten sogenannten Interferenzpigmente oder die in der DE-A-30 23 722 beschriebenen Kupferphthalocyaninpigmente der β-Modifikation enthalten und in einer Schicht eine zufriedenstellende den Ansprüchen an Kraftfahrzeuglacke genügende Effektlackierung ergeben.

Die bekannten durch mehrfaches Lackieren erhaltenen Lackschichten haben ausgezeichnete Eigenschaften in technischer und ästhetischer Beziehung. Der Nachteil besteht jedoch darin, daß zwei Lackiervorgänge erforderlich sind. Es besteht naturgemäß ein großes Bedürfnis dafür, die Lackierung von Kraftfahrzeugen zu vereinfachen. Der vorliegenden Erfindung liegt deshalb die Aufgabenstellung zugrunde, ein Verfahren zum Lackieren von Kraftfahrzeugen zu finden, gemäß dem auf die in üblicher Weise grundierten Metall-Karosserieteile in nur einem Arbeitsgang eine Effekt-Lackierung aufgebracht wird.

Es wurde nun trotz des umfangreichen Standes der Technik auf diesem Gebiet gefunden, daß diese Aufgabenstellung in überraschend einfacher Weise dadurch gelöst werden kann, daß die Lacke in der DE-A-30 23 722 beschriebene Pigmente enthalten, als Bindemittel jedoch ganz spezielle nachfolgend definierte Bindemittel eingesetzt werden, die als Lackbindemittel an sich bekannt sind, in der Automobil-Serienlackierung zur Erzeugung von Effekt-Lackierungen jedoch nicht eingesetzt werden, und daß Pigmente definierter Abmessungen verwendet werden.

Die Erfindung betrifft demgemäß das in den Ansprüchen beschriebene Verfahren.

Gemäß der Erfindung werden Metall-Karosserieteile von Kraftfahrzeugen lackiert. Es ist jedoch auch möglich, gesamte Kraftfahrzeugkarosserien zu lackieren, deren Oberfläche zum Teil auch aus anderen Werkstoffen, z. B. Kunststoffen besteht. Die Metall-Karosserieteile sind vor dem Lackieren gemäß der Erfindung in üblicher Weise vorbehandelt. Gemäß dem Stand der Technik kann das Karosserieteil z. B. zunächst zinkphosphatiert, dann mit einer Elektrotauchgrundierung versehen und anschließend mit einem auch Füller genannten Spritzgrund beschichtet sein.

Die gemäß der Erfindung verwendeten Pigmente werden gemäß dem in der DE-A-30 23 722 beschriebenen Verfahren hergestellt. Dieses wird darin in Seite 4, Zeile 1 bis Seite 6, Zeile 25 wie folgt beschrieben :

Das neue CuPc-Pigment wird direkt bei der Synthese erhalten. Hierzu wird feinteiliges Kupferpulver in Nitrobenzol mit o-Phthalodinitril in Gegenwart von Ammoniak und Molybdänsäureanhydrid als Katalysator umgesetzt.

Um die erfindungsgemäße Pigmentform zu erhalten, müssen die Ausgangsstoffe die im folgenden angegebenen Kriterien erfüllen und die Reaktionsbedingungen eingehalten werden.

Das verwendete Kupferpulver muß so feinteilig sein, daß es ohne Rückstand durch ein Sieb von 0,1 mm Maschenweite passierbar ist. Außerdem soll es zu mehr als 98 Gew.% aus Kupfer bestehen.

Vor allem aber muß das verwendete o-Phthalodinitril genügend rein sein. Es muß in aromatischen Lösungsmitteln, wie Xylol, Chlorbenzol oder Nitrobenzol ohne Rückstand löslich sein und darf höchsten 1,5, vorzugsweise höchstens 1 Gew.% an den Isomeren Terephthal- und/oder Isophthalsäuredinitril und/oder an anderen Nitrilen wie Tolunitril enthalten. Je reiner das verwendete o-Phthalodinitril ist, um so leichter wird die neue Pigmentform des CuPc erhalten. So erhält man mit o-Phthalodinitril, dessen Reingehalt ≥ 99,9 Gew.% beträgt, ein plättchenförmiges CuPc-Pigment, das mehr als 80 Gew.% an Teilchen ≥ 20 μm enthält. Demgegenüber erhält man mit einem o-Phthalodinitril, das 2 bis 4 Gew.% an den isomeren Dinitrilen und/oder anderen Nitrilen enthält, ein CuPc, das neben Plättchen von unterhalb 10 μm Länge bereits erhebliche Anteile an nadelförmigen β-CuPc-Kristallen enthält. Bei einem Gehalt von mehr als 4 Gew.% an den isomeren Dinitrilen und/oder anderen Nitrilen entsteht im wesentlichen nur noch β-CuPc in der (bekannten) Nadelform.

Die Reinheit der übrigen zur Herstellung benötigten Stoffe ist nicht so kritisch. Die handelsüblichen technischen Qualitäten sind genügend rein.

Das Verhältnis o-Phthalodinitril zu Lösungsmittel liegt in der Regel zwischen 1 : 2,5 und 1 : 10, vorzugsweise zwischen 1 : 3,5 bis 1 : 4,6 Gewichtsteilen.

Die Menge an Kupferpulver beträgt höchstens die stöchiometrisch erforderliche Menge, d. h. 0,25 Äquivalent je Mol o-Phthalodinitril. Vorzugsweise wendet man jedoch Phthalodinitril im Überschuß an, damit bei der Isolierung ein von Kupferpulvern freies Verfahrensprodukt erhalten wird. In der Regel wendet man daher einen bis zu 10 %igen, vorzugsweise einen 2 bis 6 %igen Überschuß Dinitril an.

Die Menge an Molybdänsäure liegt zwischen 0,001 und 0,15, vorzugsweise zwischen 0,01 und 0,1 Gew.%, bezogen auf o-Phthalodinitril und liegt damit unterhalb der üblicherweise bei der Herstellung von CuPc aus o-Phthalodinitril angewendeten Menge Molybdänsäure (anhydrid).

Zur Herstellung der neuen Pigmentform verfährt man so, daß man das o-Phthalodinitril und das Kupferpulver im Lösungsmittel, vorzugsweise Nitrobenzol, unter einer Ammoniakatmosphäre bei Temperaturen zwischen 70 und 100 °C mit Ammoniak sättigt, dann auf 180 bis 210 °C, vorzugsweise auf 145 bis 205 °C erwärmt und erst 30 bis 60 Minuten, nachdem die Reaktionstemperatur erreicht worden ist, das als Katalysator erforderliche Molybdänsäureanhydrid zugibt. Bei der Umsetzung soll zu starkes Rühren vermieden werden. Das Reaktionsgemisch wird nur so gerührt, daß sich das Kupferpulver gerade nicht absetzt. Bei der Umsetzung zind alle Maßnahmen zu vermeiden, durch welche die Bildung von vielen Kristallkeimen damit die Bildung von nadelförmigen β-CuPc begünstigt wird. Aus diesem Grunde sollen auch keine Reaktionsbeschleuniger wie Kupfer-I-Salze oder Ammoniumsalze im Reaktionsgemisch zugegen sein.

Die Reaktions wird so geführt, daß die exotherme Bildung des CuPc über einen längeren Zeitraum erfolgt. So hat sich bei 200 °C eine Reaktionsdauer von 4 bis 20 Stunden als günstig erwiesen. Nach 4 Stunden liegt bereits die neue Pigmentform vor, jedoch beträgt die Ausbeute gelegentlich nur um 80 % der Theorie. Nach 16 bis 20 Stunden bei 200 °C wird eine Ausbeute von oberhalb 90 % der Theorie sicher erreicht.

Die Form, die Größe und die Teilchengrößenverteilung können bei der Reaktion durch Variation der Temperatur, durch Zugabe geringer Mengen eines niederen Alkohols, vorzugsweise Methanol beim Aufheizen des Reaktionsansatzes und/oder der angewendeten Menge Molybdänsäureanhydrid in gewissem Maße beeinflußt werden. Hierdurch können Pigmentformen erhalten werden, die in Lack- und Druckfarben unterschiedliche Nuancen aufweisen. Auf diese Weise können Pigmentformen hergestellt werden, die in Lacken leuchtend goldbraune bis dunkelbraune oder leuchtend rotbraune bis gelbbraune Effekte geben.

Die Teilchengrößenverteilung, die gemäß den Ansprüchen der vorliegenden Anmeldung vorliegen muß, kann durch Steuerung der Herstellungsbedingungen, wie aus dem vorstehenden Zitat der DE-A-30 23 722 ersichtlich ist, durch geeignete Reaktionsführung erhalten werden. Zur Herstellung der gemäß der vorliegenden Erfindung eingesetzten Pigmente eignet sich besonders das im Beispiel 3 der DE-A-3023 722 im einzelne beschriebene Verfahren. Man kann die gemäß der vorliegenden Erfindung verwendeten Pigmente in der definierten Korngrößenverteilung auch durch Anwendung bekannter physikalischer Methoden, wie Sedimentationstrennung, Absieben, Windsichten isolieren.

Die gemäß der vorliegenden Erfindung verwendeten Pigmente haben also eine Korngrößenverteilung derart, daß mindestens 90 Gew.% der Pigmentteilchen eine Länge zwischen 10 und 30 μm aufweisen.

Der Rest der Teilchen hat eine Länge von höchstens 50 μm, wobei ebenfalls das Verhältnis von Länge zu Breite mindestens 3,3 : 1 ist. Wenn die Pigmentteilchen größer sind, wird zwar ein ausgeprägterer Metallic-Effekt erzielt, jedoch wird eine weniger glänzende Oberfläche erhalten.

Die Lacke enthalten zweckmäßig 5 bis 20 Gew.% der erwähnten Pigmente, bezogen auf Bindemittel-Festkörper im Lack.

Neben den genannten Pigmenten können die Lacke zur Änderung des Farbtons andere übliche Pigmente enthalten. Beispielsweise wird zur Erzielung eines grünen Farbtons ein Chromgelb-Pigment zugesetzt. In Kombination mit der blauen Körperfarbe des β-Cu-Phthalo Pigments resultiert ein grüner Farbeindruck.

Das Gewichtsverhältnis üblicher, farbgebender Pigmente zu den Pigmenten gemäß DE-A-30 23 722 in den gemäß der Erfindung verwendeten Lacken liegt zweckmäßig im Bereich von 0 : 1 bis 1 : 1 Gewichtsteilen.

Es ist entscheidend, daß die gemäß der Erfindung verwendeten Lacke als Bindemittel ein an sich bekanntes Gemisch aus Acrylatharzen und/oder gesättigten Polyestern, jeweils mit einer OH-Zahl von 40 bis 200 mit damit vernetzenden aliphatischen Polyisocyanaten enthält. Es ist überraschend, daß nur mit diesen speziell ausgewählten Bindemitteln in einer Schicht eine glänzende Lackierung mit einem Metallic-Effekt erzielt wird, die den Anforderungen an die Lackierung einer Kraftfahrzeug-Karosserie entspricht.

Die gemäß der Erfindung verwendeten ß-Phthalocyanin-Pigmente sind andererseits im Vergleich zu üblichen Farbpigmenten, wie sie in der Lackindustrie eingesetzt werden, wesentlich gröber. Die Farbpigmente haben in der Regel eine Teilchengröße von weniger als 1 μm. Metallic-Pigmente, die oben erwähnten sogenannten Interferenzpigmente und die Pigmente der DE-A-30 23 722 sind dagegen blättchen- oder stäbchenförmige Pigmente mit einer Abmessung in mindestens einer Richtung von mehr als 10 μm.

Die üblichen Farbpigmente mit Teilchengrößen von etwa 1 μm können für Einschicht-Lackierungen von Kraftfahrzeugen problemlos eingesetzt werden, wobei als Bindemittelsysteme eingesetzt werden können Alkyd-Melamin, Acryl-Melamin, Acrylat-Polyisocyanat und/oder Polyester-Polyisocyanat. Es werden hochglänzende Überzüge erzielt, weil die extrem kleine Teilchengröße der Pigmente die Oberfläche nicht stört.

Wenn man dagegen die bekannten Interferenz-Pigmente mit diesen Bindemittelsystemen einsetzt, kann man zufriedenstellende Einschicht-Lackierungen nicht erzielen, weil die Oberflächen matt sind. Das gleiche gilt für die Verwendung der in der DE-A-30 23 722 beschriebenen Pigmente mit Bindemittelsystemen auf Basis von Polykondensationsharzen, wie Alkyd/Melamin, Acryl/Melamin. Dies gilt selbst dann, wenn man die gemäß vorliegender Erfindung einzusetzenden speziellen Korngrößenverteilungen einhält. Auch in diesem Fall werden bei Einschicht-Lackierungen völlig unzulängliche Lackierungen erhalten.

Nur dann, wenn man die gemäß der vorliegenden Erfindung definierten Pigmente in Lacken einsetzt, die als Bindemittel Gemische aus Acrylatharu und/oder gesättigtem Polyesterharz mit damit vernetzbaren Polyisocyanaten enthalten, kann man in einer Schicht mit einer Trockenfilmstärke von 30 bis 50 μm Lackierungen erhalten, die hochglänzend sind, einen Metallic-Effekt aufweisen und den Anforderungen einer Serienlackierung von Automobil-Karosserien entsprechen. Unter Serienlackierung wird die Lackierung bei der Herstellung der Kraftfahrzeuge verstanden im Gegensatz zur Reparaturlackierung. Es ist nach dem Stand der Technik nicht möglich Kraftfahrzeug-Karosserien mit Effekt-Lacken in einer Schicht mit Lacken zu lackieren, die als Bindemittel Acrylatharze und/oder gesättigte Polyester in Kombination mit Polyisocyanaten enthalten, und dabei Lackierungen mit den Eigenschaften zu erzielen, die von neuen Kraftfahrzeugen gefordert werden.

Es ist nicht erklärlich, weshalb nur diese spezielle Kombination zu dem genannten Effekt führt, während andere Kombinationen von Pigmenten und Bindemitteln nicht in einer Schicht Lackierungen mit Metallic-Effekt und hochglänzender Oberfläche liefern.

Als Bindemittel für die gemäß der Erfindung verwendeten Lacke sind geeignet :

A) Acrylatharze, die sich durch ihren Hydroxylgruppengehalt für eine Umsetzung mit Polyisocyanaten eignen und eine OH-Zahl zwischen 40 und 200 (bezogen auf Festharz) besitzen. Bevorzugt werden Mischpolymerisate mit einer OH-Zahl zwischen 80 und 160 auf Basis von Gemischen aus Styrol, Methylmethacrylat, Hydroxyethylacetat, Acrylsäure und Glycidylestern von α-Alkylalkanmonocarbonsäuren und/oder α,α-Dialkylalkanmonocarbonsäuren, wie sie in der DE-A-26 03 259 beschrieben werden, eingesetzt.

B) Gesättigte verzweigte Polyesterharze, die mit niedermolekularen Fettsäuren modifiziert sein können und eine OH-Zahl von 40 bis 200 (bezogen auf Festharz) besitzen.

C) Mit A) und/oder B) vernetzende aliphatische Polyisocyanate auf Basis Hexamethylendiisocyanat oder Isophorondiisocyanat.

Bevorzugt liegt die OH-Zahl über 80. Andererseits liegt sie zweckmäßig unter 160.

Die Acrylatharze und/oder gesättigten Polyester werden mit im wesentlichen stöchiometrischen Mengen aliphatischer Polyisocyanate umgesetzt. Unter stöchiometrisch wird verstanden, daß auf jede OH-Gruppe der Acrylatharze und/oder Polyester im wesentlichen eine Isocyanatgruppe entfällt. Ein geringer Überschuß oder Unterschuß von Isocyanatgruppen, z. B. bis zu 10 Äquivalent-Prozent, vorzugsweise bis zu 5 Äquivalent-Prozent, kann in Kauf genommen werden.

Als Acrylatharze können z. B. die nachfolgend genannten Handelsprodukte eingesetzt werden, wobei die ungefähren OH-Zahlen dieser Handelsprodukte genannt werden. Bei den Namen dieser Handelsprodukte handelt es sich um eingetragene Warenzeichen. Das gleiche gilt für die nachfolgend genannten Handelsprodukte von Polyesterharzen.

| Acrylatharze : | OH-Zahl (bezogen auf Festharz) |
|---|---|
| Synocryl 86 7 S | 79 |
| Macrynal SM 510 N | 150 |
| Synedol 2535 XG | 59 |
| Synthalat A 151 | 149 |
| Degalan LS 15/300 | 145 |

| Polyesterharze : | OH-Zahl (bezogen auf Festharz) |
|---|---|
| Desmophen RD 181 | 165 |
| Desmophen 670 | 142 |
| Alftalat AN 950 | 100 |

Als Polyisocyanate können ebenfalls die im Handel erhältlichen Produkt verwendet werden. Beispiele hierfür sind die unter den eingetragenen Warenzeichen bekannten Produkte Desmodur N (trifunktionelles Isocyanat auf Basis Hexamethylendiisocyanat), Basonat LR 8423 (entspricht im wesentlichen Desmodur N), Desmodur Z-Typen (auf Basis Isophorondiisocyanat).

### Beispiel 1 : Lackierung schwarz-rot-changierend

95 Gew.-Teile eines mit Isocyanat härtbaren farblosen Lackes enthaltend die üblichen für Automobildecklacke geeigneten lacktechnischen Zusatzstoffe und als Bindemittel 41,8 Gew.% Acrylatharz fest, das nach DE-A-26 03 259 hergestellt ist, werden mit

5 Gew.-Teilen des in Beispiel 3 der De-A-30 23 722 beschriebenen Cu-phthalocyaninpigments gut vermischt und über ein Sieb mit einer Maschenweite von 30 μm filtiert.

90 Gew.-Teile dieser Mischung werden unter Rühren mit

10 Gew.-Teilen eines mit 2,16 Gew.% Spezialschwarz IV pigmentierten Mischlackes auf Basis Macrynal SM 510 N versetzt.

Der so pigmentierte Lack wird vor der Applikation mit der stöchiometrischen Menge Desmodur N als Isocyanat-Härterkomponente versetzt und mit einer Mischung aus gleichen Teilen Butylacetat und Ethylglykolacetat auf eine Spritzviskosität von 18 Sek. 4 DIN 53 211 eingestellt.

Festkörpergehalt : 44,09 Gew.%, gemessen durch 60-minütiges Erwärmen auf 150 °C im Umlufttrockenschrank.

Gewichtsverhältnis : Spezialschwarz IV zu Pigment gemäß DE-A-30 23 722 : 0,048 : 1.

Der Effektlack wird mit einer Fließbecherpistole auf ein mit einem Spritzgrund in üblicher Weise vorbehandeltes Metall-Karosserieteil eines Kraftfahrzeuges so aufgebracht, daß sich eine Trockenfilmstärke von 40 μm ergibt, und in einem Umluftofen bei 60 °C 45 Minuten forciert getrocknet. Man erhält so eine gleichmäßige, wolkenfreie Beschichtung, die einen außerordentlich hohen Glanz aufweist und einen intensiven Schwarz-Rot-Changiereffekt zeigt.

### Beispiel 2 : Lackierung grün-rot-changierend

95 Gew.-Teile des in Beispiel 1 beschriebenen mit Isocyanat härtbaren farblosen Lackes werden mit 5 Gew.-Teilen des in Beispiel 1 beschriebenen Cuphthalocyaninpigments vermischt und über ein 30 μm Sieb filtriert.

91 Gew.-Teile dieser Mischung werden mit

9 Gew.-Teilen eines mit 25 Gew.% Chromgelb pigmentierten Mischlackes auf der in Beispiel 1 angegebenen Basis vermischt.

Analog zu Beispiel 1 wird die Isocyanat-Härterkomponente zugesetzt, auf Spritzviskosität von 18 Sek. 4 DIN 53 211 eingestellt und auf ein in üblicher Weise vorbehandeltes Metall-Karosserieteil eines Kraftfahrzeuges aufgespritzt.

Festkörpergehalt : 44,56 Gew.% gemessen durch 60-minütiges Erwärmen auf 150 °C im Umlufttrockenschrank.

Gewichtsverhältnis : Chromgelb zu Pigment gemäß DE-A-30 23 722 : 0,49 : 1.

Nach einer Trockenzeit von 45 Minuten bei 60 °C erhält man einen gleichmäßigen, hochglänzenden Überzug, der einen ansprechenden Grün-Rot-Changiereffekt mit hoher Brillanz aufweist.

**Patentansprüche**

1. Verfahren zur Lackierung von in üblicher Weise grundierten Metall-Karosserieteilen von Kraftfahrzeugen mit Lacken, die Kupferphthalocyaninpigment der ß-Modifikation enthalten, das zu mindestens 50 Gew.% aus Plättchen besteht, die mindestens 10 μm lang und mindestens 3 μm breit sind, wobei das Verhältnis von Länge zu Breite mindestens 3,3 : 1 ist und das Pigment zwischen 610 und 640 und zwischen 710 und 740 nm je ein Reflexionsmaximum aufweist, dadurch gekennzeichnet, daß der Lack als Bindemittel ein an sich bekanntes Gemisch von Acrylatharzen und/oder gesättigten Polyestern, jeweils mit einer OH-Zahl von 40 bis 200, mit einer im wesentlichen äquivalenten Menge von damit vernetzenden aliphatischen Polyisocyanaten enthält und in einer einzigen Schicht mit einer Trockenfilmstärke von 30 bis 50 μm aufgetragen und gehärtet wird, und daß mindestens 90 Gew.% der Pigmentteilchen eine Länge zwischen 10 und 30 μm aufweisen und der Rest der Teilchen eine Länge von höchstens 50 μm aufweist.

2. Verfahren nach Anspruch 1, dadurch gekennzeichnet, daß der Lack 5 bis 20 Gew.% Kupferphthalocyaninpigment der ß-Modifikation, bezogen auf Bindemittelfestkörper, enthält.

**Claims**

1. A process for painting conventionally primed metal coachwork components of motor vehicles with paints containing copper phthalocyanine pigment of the ß-modification of which at least 50 % by weight consists of platelets at least 10 μm long and at least 3 μm wide, the length-towidth ratio being at least 3.3 : 1 and the pigment showing a reflection maximum between 610 and 640 nm and between 710 and 740 nm, characterized in that the paint contains as binder a mixture known per se of acrylate resins and/or saturated polyesters each having an OH number of from 40 to 200 with a substantially equivalent quantity of aliphatic polyisocyanates crosslinking therewith and is applied and hardened in a single layer with a dry film thickness of from 30 to 50 μm and in that at least 90 % by weight of the pigment particles have a length of from 10 to 30 μm and the rest a length of at most 50 μm.

2. A process as claimed in Claim 1, characterized in that the paint contains from 5 to 20 % by weight copper phthalocyanine pigment of the ß-modification, based on binder solids.

**Revendications**

1. Procédé de revêtement de pièces de carrosserie métalliques de véhicules automobiles apprêtées de manière habituelle, avec des laques qui contiennent un pigment à base de phtalocyanine de cuivre de modification ß se composant pour au moins 50 % en poids de lamelles ayant au moins 10 μm de longueur et au moins 3 μm de largeur, le rapport de la longueur à la largeur étant au moins de 3,3 : 1 et le pigment présentant un maximum de réflexion entre 610 et 640 et un autre entre 710 et 740 nm, caractérisé en ce que la laque contient comme liant un mélange en soi connu de résines acrylates et/ou de polyesters saturés, avec à chaque fois un nombre d'OH de 40 à 200, avec une quantité essentiellement équivalente de polyisocyanates aliphatiques se réticulant avec elles, et en ce qu'elle est déposée et durcie en une seule couche ayant une épaisseur de pellicule sèche de 30 à 50 μm, et en ce qu'au moins 90 % en poids des particules de pigment présentent une longueur comprise entre 10 et 30 μm et le reste des particules une longueur d'au plus 50 μm.

2. Procédé selon la revendication 1, caractérisé en ce que la laque contient de 5 à 20 % en poids de pigment à base de phtalocyanine de cuivre de modification ß, par rapport au corps solide liant.